Europäisches Patentamt

European Patent Office

Office européen des brevets

(11) Publication number : **0 547 771 A1**

# (12) EUROPEAN PATENT APPLICATION

(21) Application number : **92310530.8**

(22) Date of filing : **18.11.92**

(51) Int. Cl.⁵ : **C08F 214/22, C08F 214/18**

(30) Priority : **17.12.91 US 808903**

(43) Date of publication of application :
**23.06.93 Bulletin 93/25**

(84) Designated Contracting States :
**DE FR GB IT NL**

(71) Applicant : **MINNESOTA MINING AND
MANUFACTURING COMPANY**
**3M Center, P.O. Box 33427**
**St. Paul, Minnesota 55133-3427 (US)**

(72) Inventor : **Ramachandran, Kolikkara, c/o
Minnesota Mining and
Manufac. Company, 2501 Hudson Road, P.O.
Box 33427
Saint Paul, Minnesota 55133-3427 (US)**
Inventor : **Hermey, Christine H., c/o Minnesota
Mining and
Manufac. Company, 2501 Hudson Road, P.O.
Box 33427
Saint Paul, Minnesota 55133-3427 (US)**

(74) Representative : **Baillie, Iain Cameron et al
c/o Ladas & Parry, Altheimer Eck 2
W-8000 München 2 (DE)**

(54) Methanol-resistant fluorocarbon elastomers.

(57)   Fluorocarbon elastomer gums are prepared containing lower fluorine content. The gums can be compounded and cured to form shaped articles with surprising resistance to swelling by methanol.

EP 0 547 771 A1

This invention relates to fluorocarbon elastomers and their curing. In a further aspect it relates to cured, shaped articles of fluorocarbon elastomer, such as automotive fuel line hose and O-ring seals.

Fluorocarbon elastomers, or fluoroelastomers, are synthetic elastomeric polymers with a high fluorine content - see, for example, West, A.C. and Holcomb, A.G., "Fluorinated Elastomers," Kirk-Othmer, Encyclopedia of Chemical Technology, Vol. 8, pp. 500-15 (#3rd ed., John Wiley & Sons, 1979). Fluorocarbon elastomers, particularly the copolymers of vinylidene fluoride ($VF_2$) with other ethylenically unsaturated halogenated monomers, such as hexafluoropropene (HFP), tetrafluoroethylene (TFE), $C_3F_5H$, and $C_2F_3Cl$, have become the polymers of choice for high temperature applications, such as seals, gaskets, and linings, especially when shaped articles thereof are subject to exposure to hostile environments, such as hydrocarbon solvents, lubricants, and oxidizing or reducing conditions.

Gums of fluorocarbon elastomers can be compounded with a curing system and other ingredients and shaped and then cured to produce various elastomeric articles and coatings having heat and chemical resistance and other properties which enable them to withstand hostile environments. Such compounded polymers are typically fabricated into automotive engine oil seals, fuel system components, such as fuel line hoses and O-ring seals, and drive train seals. Smaller, hotter-running automotive engines, modern fuel blends, and aggressive oil additives and other chemical substances used in operating the engines have made fluorocarbon elastomers the polymers of choice for a host of elastomeric engine components where reliable sealing is required and of environmental concern (See Brullo, "Fluoroelastomer Rubber for Automotive Applications", Automotive Elastomer & Design, June 1985, and "Fluoroelastomers Seal Up Automotive Future", Materials Engineering, October, 1988).

Most commercially available fluorocarbon elastomers, such as the illustrative polymers described above, are sold, for example, under the trademarks "AFLAS," "FLUOREL," "DAIEL," and "VITON". Some of these are crosslinked with aromatic polyhydroxy compounds, such as bisphenols, which are compounded with the elastomer gum along with a curing accelerator, such as a quaternary phosphonium salt, and acid acceptors, such as magnesium oxide and calcium hydroxide - see, for example, U.S. Pat. No. 4,287,320 (Kolb). Other fluorocarbon elastomers are peroxide-cured and contain interpolymerized units derived from a cure-site monomer such as the bromine-containing, peroxide-curable fluorocarbon elastomers described in U.S. Pat. Nos. 4,035,565 (Apotheker et al.) and 4,450,263 (West).

One weakness of typical commercial fluorocarbon elastomers is lack of adequate solvent resistance to methanol and methanol-containing fuels for applications such as automotive fuel line hoses. Decreased solvent swell in methanol-containing fuels can be obtained with fluorocarbon elastomers with high fluorine content, as described, for example, by Nersasian, E. in Elastomerics, Vol. 112 (10), pp 26-30 (1980). Other references describing the correlation of higher fluorine content to alcohol resistance include: Meyers, M. E., et al., J. Polym. Sci., Vol. 32(2), pp 3515-39 (1986); Thomas, E., Mater. Eng., Vol. 99(3), pp 46-50 (1981); and Abv-Isa, I.A., Rubber Chem. Technology, Vol. 56(1), pp 135-168 (1983).

U.S. Pat. No. 4,123,603 (Stewart) describes certain terpolymers of $VF_2$, HFP, and TFE, containing specified ranges of weight percents of the monomers. The terpolymers of the specified compositions are said to have lower glass transition temperatures than comparative polymers. The minimum amount of fluorine in the preferred compositions described in said patent is 66.1%. Comparative polymers described in said patent contain non-preferred amounts of monomers, included a comparative example which contains 64.4 weight percent fluorine.

U.S. Pat. No. 3,857,807 (Kometani et al.) describes certain fluoroelastomer copolymers of $VF_2$. Fluoroelastomer copolymers are claimed that include copolymers which contain as low as 62.2 weight percent fluorine. The Examples in the patent describe polymers which contain 67.5 or more weight percent fluorine.

Briefly, in one aspect, the present invention provides a fluoroelastomer gum, or polymer, whose interpolymerized units are derived from $VF_2$ and at least one other fluorine-containing comonomer, wherein said gum contains from 62.5% to 64.3% by weight fluorine based on weight of the gum. Said gum composition can be cured to produce a cured gum that is resistant to swelling by methanol.

A first class of the gums of this invention consists of fluorocarbon elastomer gum whose interpolymerized units consist essentially of units derived from $VF_2$ and HFP. Said gums incorporate said monomers in the following weight percentages based on weight of the gum: 71.8 to 81.0 % $VF_2$ and 19.0 to 28.2 % HFP. Said gums may optionally contain small amounts of interpolymerized units derived from additional monomers, for example, it may contain about 1 weight percent of units derived from a cure-site monomer such as a bromo-olefin, e.g. $CH_3OCF=CFBr$. Said first class may conveniently be referred to as $VF_2$-HFP copolymers.

A second class of the gums of this invention consists of fluorocarbon elastomer gums whose interpolymerized units consist essentially of units derived from $VF_2$ HFP, and TFE. Said gums incorporate said monomers in the following weight percentages based on weight of the gum: 71.8 to 76.0 % $VF_2$, 16.5 to 21.0 % HFP, and 4.3 to 9.7 % TFE. Said gums may optionally contain small amounts of interpolymerized units derived from additional monomers, for example, it may contain about 1 weight percent of units derived from a cure site monomer such as a bromo-olefin, e.g. $CH_3OCF=CFBr$. Said second class may conveniently be referred to as $VF_2$-HFP -TFE terpolymers.

In another aspect of this invention, cured articles are prepared from the fluorocarbon elastomer gums of this invention by curing and shaping said gums. Conventional fluorocarbon elastomer cure systems can be employed, including systems comprising polyhydroxy and organo-onium compounds and systems comprising peroxide compounds. When the peroxide cure-systems are used the fluorocarbon elastomer gum preferably contains units derived from a cure-site monomer such as a bromo-olefin, e.g. $CH_3OCF=CFBr$.

The fluorocarbon elastomer gums of this invention have reduced weight % fluorine, but surprisingly, compared with commercial fluoroelastomers, can be cured to provide articles having good resistance to methanol and desirable low temperature properties. The cured gums of this invention also have desirable tensile strength and other physical properties.

The $VF_2$-HFP copolymers, and the $VF_2$-HFP-TFE terpolymers of this invention can be prepared as a latex using conventional free-radical initiated, emulsion polymerization techniques as described, for example, in U.S. Pat. No. 4,564,662 (Albin), which description is hereby incorporated by reference. The fluoroelastomer latex is coagulated, washed, and dried. The dried polymer may be vulcanized with a conventional vulcanizing (or curing) agent for fluorocarbon elastomers (for example, aromatic polyhydroxy compounds such as bisphenol AF), which are usually used in combination with certain vulcanization accelerators or co-curing agents, viz., organo-onium compounds, e.g. ammonium, phosphonium and sulfonium compounds. See, for example, the cure systems described in U.S. Pat. No. 4,882,390 (Grootaert, et al.), and the references cited therein, which descriptions of organo-onium and polyhydroxy cure-systems are hereby incorporated by reference.

In addition to the vulcanizing and co-curing agents, divalent metal oxides or hydroxides (as inorganic acid acceptors), fillers, processing aids, and other adjuvants conventionally employed in the vulcanization of fluorocarbon elastomer compositions can be compounded with the gums of this invention.

When a cure-site monomer is copolymerized with the fluorinated monomers in accordance with this invention, a peroxide cure system may be used. Such systems are described, for example, in U.S. Pat. Nos. 4,450,263 (West) and 4,564,662 (Albin), which descriptions are hereby incorporated by reference. Cure-site monomers include bromo-olefins, e.g. $CH_3OCF=CFBr$ and $CF_2=CHBr$, and iodo-olefins, e.g. $IC_2H_4OCH=CH_2$ and $IC_2F_4I$.

The cured fluorocarbon elastomer of this invention has excellent resistance to swelling in methanol as well as the desired physical properties, for example tensile strength and elongation, of commercial fluorocarbon elastomer compositions. Particularly useful articles that can be fabricated from the fluorocarbon elastomer compositions of this invention are fluorocarbon elastomer automotive components, such as those described in the two articles of Brullo, supra, e.g., fuel line hoses and O-rings.

The compounded gum formulation of this invention can also include processing agents, such as those conventionally used to aid in the molding or extrusion of the formulation e.g. carnuba wax or diorgano sulfur oxides, such as those described in U.S. Pat. No. 4,287,320 (Kolb).

Fillers can be mixed with the fluoroelastomer gum to improve molding characteristics and other properties. When a filler is employed, it can be added to the vulcanization recipe in amounts of up to about 100 parts per hundred parts by weight of gum, preferably between about 15 to 50 parts per hundred parts by weight of the gum. Examples of fillers which may be used are reinforcing thermal grade carbon blacks or non-black pigments of relatively low reinforcement characteristics such as clays and barytes.

In accordance with this invention, the desired amounts of compounding ingredients and other conventional adjuvants or ingredients are added to the uncured fluorocarbon gum stock and intimately admixed or compounded therewith by employing any of the usual rubber mixing devices such as Banbury mixers, roll mills, or any other convenient mixing device. The temperature of the mixture on the mill typically will not rise above about 120°C. During milling, the components and adjuvants are distributed uniformly throughout the gum. The curing process typically comprises extrusion of the compounded mixture or pressing the compounded mixture in a mold, e.g., a cavity or a transfer mold, and subsequent oven-curing. Pressing of the compounded mixture (press cure) is usually conducted at a temperature between about 95°C and about 230°C, preferably between about 150°C and about 205°C, for a period of from 1 minute to 15 hours, typically from 5 minutes to 30 minutes. A pressure of between about 700 kPa and about 20,600 kPa is usually imposed on the compounded mixture in the mold. The molds first may be coated with a release agent, such as a silicone oil, and prebaked. The molded vulcanizate is then usually post-cured (oven-cured) at a temperature usually between about 150°C and about 315°C., typically at about 232°C, for a period of from about 2 hours to 50 hours or more depending on the cross-sectional thickness of the article. The compositions of this invention can be used to form seals, O-rings, gaskets, etc.

Objects and advantages of this invention are illustrated in the following nonlimiting examples.

### EXAMPLES

Fluoroelastomer copolymers of VF$_2$ and HFP, and terpolymers of VF$_2$, HFP, and TFE were prepared by peroxide-initiated emulsion polymerization. Examples including a cure-site monomer were also prepared.

Glass transition temperatures of the resulting uncured fluoroelastomer gums were measured. Methanol swell properties and tensile and elongation properties of cured fluoroelastomers were measured. These properties were determined for compositions utilizing the polymers of this invention as well as comparative polymers, including commercially available polymers.

The glass transition temperatures (T$_g$, mid-point) of uncured polymers were measured by Differential Scanning Calorimetry, ASTM D-3418-82. Methanol volume swell of cured polymer samples was measured after immersing cured samples for 70 hours in solvent at room temperature, ASTM D-471-79. Tensile strength at break, and modulus at 100% elongation, of cured polymer samples was measured using samples cut from 1.8 mm thick sheets, ASTM D-412-75.

### Example 1

A one-gallon stainless steel polymerization reactor, fitted with a mechanical stirrer, was controlled at a temperature of 71°C and a pressure of 200 psig (1.38 MPa). The following initial charge was added to the reactor:

a) 2800 g of deionized water

b) 16 g of potassium persulfate polymerization initiator

c) 5 g of C$_8$F$_{17}$SO$_2$N(C$_2$H$_5$)COOK emulsifier

d) 2.6 g of diethyl malonate chain transfer agent.

The mechanical stirrer was operated at 400 rpm. A monomer blend (1100 g) of VF$_2$ and HFP was charged to the reactor at the take-up rate of approximately 145 grams per hour over a total polymerization reaction time of 7.5 hours. The resulting stable latex was removed from the reactor and coagulated, washed with hot water, and dried in a circulating air oven. A fine elastomeric crumb was recovered. The composition, as determined by F-NMR, contained 80.3 wt.% interpolymerized units derived from VF$_2$ and 19.7 wt.% interpolymerized units derived from HFP, giving a calculated fluorine content of 62.7%.

### Examples 2-9 and Comparative Examples C2-C7 and C9-C18

The copolymers of Examples 2-9 and Comparative Examples C2-C7 and C9-C18 were prepared as described in Example 1, with the required adjustments in ratio of monomers, amounts of initiator, chain transfer agent, emulsifier and buffer, and in agitation. As the amount of VF$_2$ decreased, and the amount of HFP increased, the amount of buffer (K$_2$HPO$_4$) increased from 0 to 9.3 g, the amount of chain transfer agent (diethyl malonate) increased from 2.6 g to 4.3 g, the agitation rate increased from 400 to 720 rpm, the amount of polymerization initiator (potassium persulfate) decreased from 16 to 13 g, and the amount of emulsifier (C$_8$F$_{17}$SO$_2$N(C$_2$H$_5$)COOK) decreased from 5 to 0.7 g.

### Comparative Examples C1 and C8

Comparative Examples C1 and C8 are respectively a homopolymer of VF$_2$ (available from Atochem, Inc. under the tradename "KYNAR") and a copolymer of VF$_2$ and HFP (commercially available as FC-2230 from 3M Company).

For all the above-described examples, Table 1 summarizes the weight % of interpolymerized units derived from the indicated monomers. The examples are listed in order of decreasing weight percent of interpolymerized units derived from VF$_2$.

## TABLE 1

| COPOLYMERS OF VF$_2$ AND HFP (Wt. %) | | |
|---|---|---|
| Example Number | VF$_2$ | HFP |
| C1 | 100 | 0 |
| 1 | 80.3 | 19.7 |
| 2 | 76.8 | 23.2 |
| 3 | 75.9 | 24.1 |
| 4 | 74.7 | 25.3 |
| 5 | 73.4 | 26.6 |
| 6 | 72.3 | 27.7 |
| 7 | 71.8 | 28.2 |
| 8 | 70.8 | 29.2 |
| 9 | 70.1 | 29.9 |
| C2 | 68.4 | 31.6 |
| C3 | 65.8 | 34.2 |
| C4 | 65.1 | 34.9 |
| C5 | 63.0 | 37.0 |
| C6 | 62.5 | 37.5 |
| C7 | 60.3 | 39.7 |
| C8 | 60.0 | 40.0 |
| C9 | 57.6 | 42.4 |
| C10 | 54.0 | 46.0 |
| C11 | 51.3 | 48.7 |
| C12 | 48.2 | 51.8 |
| C13 | 45.3 | 54.7 |
| C14 | 43.5 | 56.5 |
| C15 | 42.1 | 57.9 |
| C16 | 40.1 | 59.9 |
| C17 | 33.9 | 66.1 |
| C18 | 33.9 | 66.1 |

Examples 10 and 11 and Comparative Example C19

Fluoroelastomer terpolymer compositions of VF$_2$, HFP and TFE were prepared following the procedures described for Examples 1-9 and Comparative Examples C2-C7 and C9-C18.

Comparative Examples C20 and C21

Comparative Examples C20 and C21 are commercial terpolymers of VF$_2$, HFP and TFE. Comparative Example C20 is commercially available from 3M as FLUOREL™ FT-2350. Comparative Example C21 is commercially available from Daikin as DAIEL™ 901.

For Examples 10 and 11, and for Comparative Examples C19, C20, and C21, Table 2 summarizes the weight % of interpolymerized units derived from the indicated monomers. The examples are listed in order of decreasing weight percent of interpolymerized units derived from $VF_2$.

**TABLE 2**

| TERPOLYMERS OF $VF_2$, HFP AND TFE (Wt. %) | | | |
|---|---|---|---|
| Example Number | $VF_2$ | HFP | TFE |
| 10 | 75.5 | 16.5 | 8.0 |
| 11 | 72.9 | 22.8 | 4.3 |
| C19 | 69.3 | 21.0 | 9.7 |
| C20 | 43.0 | 33.0 | 24.0 |
| C21 | 34.2 | 42.6 | 23.3 |

Examples 12-14

Polymers containing units derived from the cure-site monomer 1-methoxy-2-bromo-1,2-difluoroethylene, $CH_3OCF=CFBr$, were prepared following the procedures described for Examples 1-9 and Comparative Examples C2-C7 and C9-C18. Examples 13 and 14 are copolymers of $VF_2$ and HFP which also contain units derived from the cure-site monomer. Example 12 is a terpolymer of $VF_2$, HFP, and TFE which also contains units derived from the cure site monomer.

Comparative Examples C22 and C23

Comparative Examples C22 and C23 are commercially available peroxide-curable fluoroelastomers, that is they contain units derived from a cure-site monomer. Comparative Examples C22 and C23 contain units derived from the cure site monomer $CHBr=CF_2$, and are commercially available from 3M Company as FLUOREL™ FC-2260 and FLS-2690.

For Examples 12, 13, and 14, and for Comparative Examples C22 and C23, Table 3 summarizes the weight % of interpolymerized units derived from the indicated monomers.

## TABLE 3

### FLUOROELASTOMERS CONTAINING CURE-SITE MONOMER
### (Wt. %)

| Example Number | VF$_2$ | HFP | TFE | CSM* |
|---|---|---|---|---|
| 12 | 72.1 | 20.3 | 6.8 | 0.8 |
| 13 | 71.8 | 27.5 | | 0.7 |
| 14 | 73.5 | 26.5 | | 0.9 |
| C22 | 61.0 | 38.0 | | 1.0 |
| C23 | 34.0 | 42.0 | 23.0 | 1.0 |

*CSM = cure-site monomer

Curing

The above-described fluoroelastomer gums were cured using conventional curing systems and methods. The gums were compounded on a two roll rubber mill to give either Cure Composition 1 or Cure Composition 2, where Table 4 lists the parts by weight of the components of Cure Compositions 1 and 2. The resulting Cure Composition was then compression molded at 177°C for 15 minutes, and then post-cured in a circulating air oven for 16 hours at 232°C for the cure-site monomer-containing Examples 12-14 and Comparative Examples C22-C23, and at 260°C for all other polymers.

**Table 4**

| | Cure Composition | |
|---|---|---|
| | 1 | 2 |
| Fluoroelastomer Gum | 100 | 100 |
| Bisphenol AF | 1.2 | 0 |
| Triphenylbenzylphosphonium Chloride | 0.9 | 0 |
| Triallylisocyanurate | 0 | 2.5 |
| Luperco 101XL | 0 | 2.5 |
| Carbon Black, N990 | 30 | 30 |
| Ca(OH)$_2$ | 6 | 3 |
| MgO | 3 | 0 |

The glass transition temperature (T$_g$) of the uncured fluoroelastomer gums, and the % methanol swell of the cured fluoroelastomer Cure Compositions are summarized in Tables 5-7. Tensile strength and modulus of the cured fluoroelastomer Cure Compositions are summarized in Table 8. The results are compared to the weight % fluorine in each polymer.

7

**TABLE 5**

| COPOLYMERS | | | |
|---|---|---|---|
| Copolymer of Example | Wt. % F | $T_g$ (°C) | Methanol volume Swell (%) |
| C1 | 59.4 | -39 | |
| 1 | 62.7 | -22 | 0.6 |
| 3 | 63.4 | -24 | 10 |
| 5 | 63.8 | -21 | 11 |
| 6 | 64.0 | -25 | 24 |
| C2 | 64.6 | -25 | 83 |
| C4 | 65.2 | | 139 |
| C7 | 66.0 | -18 | 166 |
| C8 | 66.0 | | 142 |
| C9 | 66.4 | | 91 |
| C10 | 67.0 | -15 | 77 |
| C11 | 67.5 | | 70 |
| C12 | 68.0 | -11 | 50 |
| C13 | 68.5 | | 25 |
| C15 | 69.0 | -6 | 5 |
| C16 | 69.3 | | 3 |
| C18 | 70.1 | | 2 |

**TABLE 6**

| TERPOLYMERS | | | |
|---|---|---|---|
| Terpolymer of Example | Wt. % F | $T_g$ (°C) | Methanol volume swell (%) |
| 10 | 63.4 | -23 | 0.3 |
| 11 | 63.9 | -22 | 16 |
| C19 | 64.5 | -20 | 22 |
| C20 | 68.8 | | 27 |
| C21 | 70.4 | | <5 |

**TABLE 7**

| PEROXIDE-CURED FLUOROELASTOMERS | | | |
|---|---|---|---|
| Polymer of Example | Wt. % F | $T_g$ (°C) | Methanol volume swell (%) |
| 12 | 63.6 | -23 | 22 |
| 13 | 63.7 | -25 | 23 |
| 14 | 64.0 | -23 | 18 |
| C22 | 65.4 | | 115 |
| C23 | 69.9 | | 2 |

**TABLE 8**

| TENSILE AND MODULUS PROPERTIES | | | |
|---|---|---|---|
| Copolymer Example | Wt. % F | Tensile Strength (post-cure) (MPa) | Modulus (post-cure) (MPa) |
| 1 | 62.7 | 16.6(25) | 12.8(16.4) |
| 2 | 63.2 | -------- | 9.3(12.6) |
| 3 | 63.4 | 13.8(22.3) | --------- |
| 4 | 63.6 | 13.3(22.7) | 8.2(11.9) |
| 5 | 63.8 | 12.5(20.7) | 7.7(10.1) |
| 6 | 64.0 | 11.5(19.3) | 6.9(9.8) |
| C2 | 64.6 | 11.1(18.9) | 5.3(6.1) |
| C4 | 65.2 | 10.3(15.6) | 4.0(4.8) |
| C6 | 65.6 | 9.6(14.8) | 2.9(3.8) |
| C7 | 66.0 | 9.6(14.7) | 3.2(4.1) |

The data show that the fluoroelastomer gums of this invention, that is, gums with less than 64.4 weight % fluorine, can be cured to produce fluoroelastomers which have lower percent methanol volume swell than compositions with higher weight % fluorine. Compare, for example, the methanol volume swell of the cured copolymers of Examples 1, 3, 5 and 6 with Comparative Examples C4, C7 and C8; compare the methanol volume swell of the cured terpolymer of Example 10 with Comparative Examples C19 and C20; compare the methanol volume swell of the cured peroxide curable polymers of Examples 12-14 with Comparative Example C22. These results are surprising and contrary to the teachings in the art that higher weight % fluorine is needed to have low methanol volume swell.

Glass transition temperatures of the fluoroelastomer gums of the invention have desirably lower values than compositions with higher weight % fluorine. These lower glass transition temperatures are desirable for good low temperature properties.

Various modifications and alterations of this invention will become apparent to those skilled in the art without departing from the scope and spirit of this invention.

**Claims**

1.  A curable fluorocarbon elastomer gum whose interpolymerized units comprise units derived from vinylidene fluoride and at least one other fluorine containing comonomer, wherein said gum contains from 62.5 to 64.3 weight percent fluorine, and wherein said gum can be cured to produce an elastomer which is resistant to swelling by methanol.

2. The fluorocarbon elastomer gum of claim 1 wherein said interpolymerized units consist essentially of units derived from vinylidene fluoride and hexafluoropropylene.

3. The fluorocarbon elastomer gum of claim 2 wherein said interpolymerized units consist essentially of 71.8 to 81.0 weight % of units derived from vinylidene fluoride and 19.0 to 28.2 weight % of units derived from hexafluoropropylene.

4. The fluorocarbon elastomer gum composition of claim 3 further comprising interpolymerized units derived from less than 3 weight percent of a cure-site monomer.

5. The fluorocarbon elastomer gum of claim 1 wherein said interpolymerized units consist essentially of units derived from vinylidene fluoride, hexafluoropropylene, and tetrafluoroethylene.

6. The fluorocarbon elastomer gum of claim 4 wherein said interpolymerized units consist essentially of 71.8 to 76.0 weight % of units derived from vinylidene fluoride, 16.5 to 21.0 weight % of units derived from hexafluoropropylene, and 4.3 to 9.7 weight % of units derived from tetrafluoroethylene.

7. The fluorocarbon elastomer gum composition of claim 6 further comprising interpolymerized units derived from less than 3 weight percent of a cure-site monomer.

8. A fluorocarbon elastomer gum composition comprising the gum of claim 1 and a cure system comprising a polyhydroxy compound and an organo-onium compound.

9. A shaped article comprising the composition of claim 1 in its cured state, wherein said article is resistant to swelling in methanol.

10. Method of making a shaped article comprising curing and shaping the fluorocarbon elastomer gum of claim 1.

## European Patent Office

## EUROPEAN SEARCH REPORT

Application Number

EP 92 31 0530

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 178 399 (E.S. LO) * the whole document * | 1-3 | C08F214/22 C08F214/18 |
| X | EP-A-0 050 437 (E.I. DU PONT DE NEMOURS AND CO.) * claim 1; example 4 * | 1-10 | |
| X | FR-A-1 343 197 (MONTECATINI) * example 2 * | 1 | |
| A | FR-A-1 161 747 (THE M.W. KELLOG CO.) * examples 3,4 * | 1-10 | |
| A | EP-A-0 353 636 (ASAHI K.K.K.K.) * example 3 * | 1-10 | |

-----

TECHNICAL FIELDS SEARCHED (Int. Cl.5 )

C08F

The present search report has been drawn up for all claims

| Place of search | Date of completion of the search | Examiner |
|---|---|---|
| THE HAGUE | 08 FEBRUARY 1993 | GLIKMAN J.F.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)